# EUROPEAN PATENT APPLICATION

(11) **EP 2 109 170 A1**
(43) Date of publication of application: **14.10.2009**
(21) Application number: 08006909.9
(22) Date of filing: 07.04.2008
(51) Int. Cl.: H01M 4/90, B01J 31/00

(54) **High performance orr (oxygen reduction reaction) pgm (pt group metal) free catalyst**

(71) Applicant: Acta S.p.A., 56040 Crespina (IT)
(72) Inventor: Catanorchi, Stefano, 56021 Cascina (IT); Piana, Michele, 14046 Mombaruzzo (IT)
(74) Representative: Gervasi, Gemma

(57) **Abstract**

Herein are disclosed PGM-free catalysts, made starting from transition metal phthalocyanine complexes, useful for catalytic ORR, and more particularly, alcohol tolerant catalysts as cathode material for ORR in alkaline and acid medium, characterized by low hydrogen peroxide generation and having better performance, stability and activity.

## Description

### FIELD OF THE INVENTION

The present invention relates to PGM-free catalysts useful in ORR and, more particularly, to electrocatalysts useful as cathode material for the electro-reduction of oxygen in fuel cells.

### BACKGROUND OF THE INVENTION

Fuel cells are electrochemical devices that convert the chemical energy of a reaction directly into electrical power. In such cells, a fuel (generally hydrogen, alcohols or saturated hydrocarbons) and an oxidant (generally oxygen from air) are fed in a continuous supply to the electrodes. Theoretically, a fuel cell can produce electrical energy for as long as the fuel and oxidant are supplied to the electrodes. In reality, degradation or malfunction of the components limits the practical operating life of fuels cells.

A variety of fuel cells are in different stages of development; considering, in particular, fuel cells in which electrocatalysts can be used, the following can be mentioned as examples: Polymer Electrolyte Fuel cells (PEFC) fuelled with H₂, Direct Oxidation Fuel Cells (DOFC) fuelled with alcohols (Direct Alcohol Fuel Cell, DAFC) or with any other hydrogen-containing liquid or gaseous fuel (alcohols, glycols, aldehydes, saturated hydrocarbons, carboxylic acids, etc), Phosphoric Acid Fuel Cells (PAFC) and Molten Carbonate Fuel Cells (MCFC), Fuel cells can employ both proton and anion exchange membranes.

According to the invention fuel cells include also metal-air batteries, since the metal-air batteries can be thought as fuel cell in which the fuel is the metal anodic material itself. Another possible electrochemical device which exploits the oxygen reduction reaction is the chlor-alkali electrolysis cell.

Essential components of any fuel cell of the types mentioned above are the electrodes that in general contain metals or metal particles supported on porous carbon materials bound to a suitable conductor. Catalysts usually employed for reducing the oxygen comprise transition metals, such as platinum, nickel, cobalt, silver, to mention but a few. Catalysts usually employed for oxidizing the fuel (for example H₂ in the PEFCs and methanol in the DMFC) are platinum, platinum-ruthenium, platinum-ruthenium-molybdenum and platinum-tin mixtures. The fuel cells usually contain platinum, alone or in conjunction with other metals, preferably ruthenium, at the anode, while the cathode is generally formed by platinum, yet other metals can be equally employed. The preferred presence of platinum, generally in high loadings, represents a major economic limitation to the mass production of fuel cells for transportation, cellular phones and electronic devices in general. Indeed, the high cost of platinum (currently, around 25-30 USD/g) contributes to make the cost of power produced by a fuel cell much greater than the cost of other power generation alternatives. Moreover, platinum-based cathodes in DMFC's are sensitive to crossover of methanol. Given the higher efficiency of fuel cells as compared to traditional power generation devices as well as their environmentally benign nature, it is highly desirable to develop fuel cells that do not require platinum or PGMs.

### STATE OF THE ART

The macrocyclic N4-chelates of transition metals on porous carbon materials are among the potential candidates to replace Pt at the cathode side.

Macrocyclic N4-chelates showing the best activities for oxygen reduction are tetraphenyl-porphyrins (TPP), tetramethoxyphenyl-porphyrins (TMPP), dibenzotetra-azaannulenes (TAA), and the phthalocyanines (PC) of iron and cobalt. All these materials display an activity similar to that of Pt for the electro-reduction of O₂. However, they suffer from low electrochemical stability, and they decompose either via hydrolysis in the electrolyte or attack of the macrocycle ring by peroxide intermediates.

Several research groups have reported that the heat treatment of transition metal macrocycles adsorbed on high-area porous carbon supports greatly improves their stability as electrocatalysts for oxygen reduction without substantially degrading and, in some instances, enhancing their overall catalytic activity.

Sawai, K. et al. Electrochem. 75 (2007) 163 discloses Platinum-free air cathode catalysts prepared by heat-treating transition metal hexacyanometallate precursors under an inert atmosphere. The catalytic activity for oxygen reduction was examined with the floating electrode and rotating ring-disk electrode techniques. Among several Pt-free catalysts based on 3d-transition elements, catalysts containing cobalt or copper in combination with iron exhibited high activity toward oxygen reduction, and the catalyst containing copper and iron showed very low generation of hydrogen peroxide during oxygen reduction.

US 6245707 B1 disclosed methanol tolerant catalyst materials and a method of making the same are provided. These catalyst materials were obtained by mixing together and heat-treating at least two different transition-metal-containing nitrogen chelates. The nitrogen chelates comprise metalloporphyrins such as transition-metal-containing tetraphenylporphins. Preferred transition metals are iron, cobalt, nickel, copper, manganese, ruthenium, vanadium, and zinc, but could be any transition metal other than platinum or palladium. These materials offer improved catalytic oxygen reduction in the presence of methanol, as may occur at a fuel cell cathode after methanol crossover.

US patent 2004/0236157 A1, H. Tributsch, P. Bogdanoff et al. This patent describes the preparation of cathode catalyst by pyrolyzing a blend of thiourea, Co tetramethoxyphenylporphyrine and Fe oxalate. Thiourea is used because gives a significant increase in the activity of the catalyst and Fe oxalate because it decomposes during pyrolysis acting as a foaming agent. The highly porous carbon matrix so formed contributes to an increase to the catalyst activity. This catalyst shows an activity almost identical to a conventional standard Pt cathode catalyst.

Activities of different metallomacrocyclics for the reduction of O₂ were compared in Zagal, J. H.; et al. "Linear versus volcano correlations between electrocatalytic activity and redox and electronic properties of metallophthalocyanines", Electrochimica Acta 44 [1998] 1349-1357. It was observed for Co(III)/Co(II) phtalocyanine that redox potentials shift to more positive values due to the electron-withdrawing effect of the fluoro substituent compared to unsubstituted CoPC.

Although much effort has been devoted to determine the composition and the structure of the electrocatalytic center that is formed upon pyrolysis, some controversies still exist and a number of various hypotheses have been put forward to explain the increased activity and stability of the pyrolyzed material:
- Formation of a highly active carbon with functional chemical surface groups. In this hypothesis, the transition metal atoms are not directly responsible for the increased oxygen reduction capability but instead catalyze the formation of the highly active carbon surface;
- Retention of the metal-N4 active site structure even after the pyrolysis treatment.
- Formation of a modified carbon surface on which transition metal ions are adsorbed, principally through interactions with the residual nitrogen derived from the heat-treated macrocycles.

In view of the above said it is evident the necessity of making available new PGM-free catalysts endowed of higher performance.

### BRIEF DESCRIPTION OF THE DRAWINGS

FIGURE 1 represents schematically a preferred process of preparation of the catalysts according to the invention.
FIGURE 2 shows the RDE cyclic voltammograms of Fe/Cu and Fe/Co catalysts of the invention and Pt/C in alkaline medium.
FIGURE 3 shows the ORR kinetic current in RDE test for Fe/Cu and Fe/Co catalysts of the invention and Pt/C
FIGURE 4 shows the RDE cyclic voltammograms of Fe/Cu and Fe/Co catalysts of the invention and Pt/C in acidic medium.
FIGURE 5 shows selectivity of the catalysts of the invention and Pt/C in presence of 2.55 M EtOH

### LIST OF ABBREVIATIONS

DAFC Direct Alcohol Fuel Cell
DOFC Direct Oxidation Fuel Cells
MCFC Molten Carbonate Fuel Cells
ORR Oxygen Reduction Reaction
PAFC Phosphoric Acid Fuel Cells
PC phthalocyanine
PEFC Polymer Electrolyte Fuel Cells
PGM Platinum Group Metal
RDE Rotating Disk Electrode

### SUMMARY OF THE INVENTION

The general objective of the present invention is to provide PGM free catalysts useful for catalytic ORR, and more particularly, alcohol tolerant catalysts as cathode material for ORR, in alkaline and acid medium, having better performance, higher stability and activity and showing low hydrogen peroxide generation.

### DETAILED DESCRIPTION

The catalysts of the present invention were prepared by heat treating blends comprising:
a) a Fe phthalocyanine (PC) of formula (I) 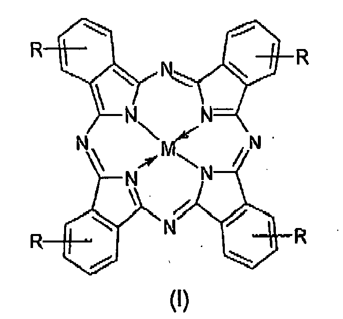 wherein
   M is Fe²⁺, Fe³⁺
   R is hydrogen or an electron-withdrawing substituent
   wherein when M= Fe³⁺ a counterion X⁻ is present
b) a transition metal phthalocyanine (Metal-PC) of formula (II) 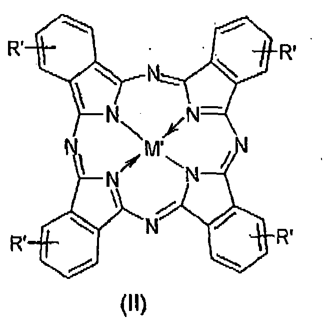 wherein
   M' is Cu²⁺ or Co²⁺
   R', independently from R, is hydrogen or an electron-withdrawing substituent
c) A compound containing nitrogen and sulfur
d) an electronic conducting porous carbon materials

Electron-withdrawing substituents according to the invention are for example: halogen, -NO₂, -SO₃H, alkylsulphonyl, arylsulphonyl, -COOH, alkylcarboxyl, cyanide, alkylcarbonyl, arylcarbonyl.

Counterion X⁻ according to the invention is for example cloride, bromide or any other anion of a monoprotic acid.

The compound c) containing nitrogen and sulfur according to the invention is that
wherein the sulfur has oxidation state -2, such as thiourea, ammonium thiocyanate, thioacetamide and isothiocyanate and their salts or derivatives.

Electronic conducting porous carbon materials according to the invention are for example: electroconductive carbon black such as Ketjen Black, Vulcan XC-72R and acetylene black; carbon for ink treated with an oxidizing agent, pyrolytic carbon, natural graphite, artificial graphite.

According to the invention the molar ratio between the chosen Metal-PC and the FePC is preferably comprised between 1.1 to 1.4, more preferably is 1.2, and said organic compound ranges from 0.4 to 0.6, preferably 0.5, molar ratio in respect of the FePC + Metal-PC.

Among the porous carbon material Ketjen Black is preferred; while among the organic compounds thiourea is preferred.

According to the invention said catalysts are prepared with the following process:
- components a, b, c and d are dispersed in an organic solvent and the resulting slurry is eventually sonicated
- the solvent is removed by evaporation
- the obtained blend is submitted to heat treatment
- thereafter the final product is collected

In a preferred embodiment the heat treatment is a two step pyrolysis

In particular said two step pyrolysis is performed as following:
1. heating at 400-450°C for at least 0.6-1 hour
2. heating at 750-800°C for at least 1.5-2 hours

According to the invention said slurry is preferably left under stirring for 12-36 hours at 20-25 °C and then preferably sonicated for at least 30 minutes.

The organic solvent is normally chosen, for example, among: methanol, ethanol, propanol, isopropanol, tetrahydrofurane (THF), dimethylformamide (DMF), dimethylacetamide (DMA); preferably the organic solvent is ethanol which allowed to obtain a better dispersion of the starting materials and a final catalyst characterized by higher performance. Moreover ethanol is volatile and can be easily removed and is non toxic and easily available.

According to the most preferred embodiment of the invention the catalyst was prepared by a two steps pyrolysis of a mixture composed of Ketjen Black and thiourea/CoPC/FePC in molar ratio 1.1/1.2/1.0 or a mixture composed of Ketjen Black and thiourea/CuPC/FePC in molar ratio 1.1/1.2/1.0

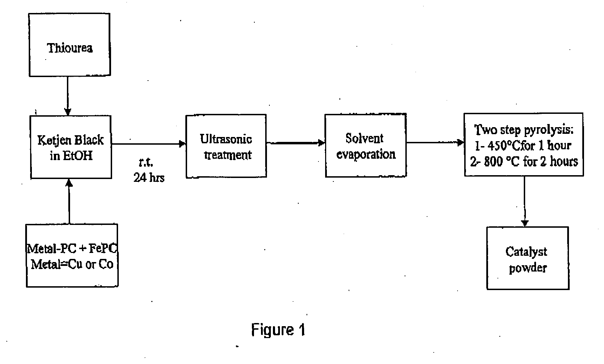

The process of preparation of the catalysts according to the invention is summarized under Figure 1.

The so obtained new catalysts have a kinetic current higher, at every potential in the kinetic range, particularly in alkaline medium, than Pt/C and those known in the art.

### EXPERIMENTAL SECTION

### Preparation of Metal-PC/FePC catalyst

FePC and Metal-PC were purchased and used as received.

To slurry of 300 ml of EtOH and 20 gr. of Ketjen Black EC600JC, 7.9 mmoles of FePC, 9,6 mmoles of Metal-PC and 0,665 gr. of thiourea (8,75 mmoles), were added under vigorous stirring. The mixture was stirred, at room temperature, for 24 h and after sonicated for ½ h.

The solvent was evaporated and the solid so obtained (about 26,6 gr.) was heat treated in a quartz tube, under Ar flux, in two pyrolysis steps; the first at 450°C for 1 h and the second at 800°C for 2 h. The final product obtained is 24-27 g of a black powder.

Following the above procedure the following exemplifying catalysts were prepared:

| **Example #** | **M** | **R** | **X-** | **M'** | **R'** |
|---|---|---|---|---|---|
| **1** | Fe³⁺ | H | Cl⁻ | Cu²⁺ | H |
| **2** | Fe³⁺ | H | Cl⁻ | Co²⁺ | H |
| **3** | Fe²⁺ | H | none | Cu²⁺ | H |
| **4** | Fe²⁺ | H | none | Co²⁺ | H |

The ORR catalysts so obtained were submitted to electrochemical analysis.

### Electrochemical analysis in alkaline medium:

The electrochemical analyses were carried out in 0.1 M KOH for example catalysts 1 and 2 and a commercial 10% Pt on Vulcan XC-72R. The inks are prepared using the binder-ionomer from Tokuyama (A3, 5 wt%) with the same recipe for all the catalysts.

The ionomer to carbon weight ratio was 0.175.

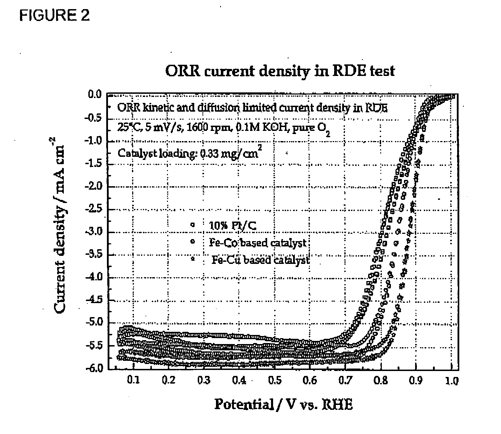

In FIGURE 2 the Rotating Disk Electrode cyclic voltammograms of the three catalysts are shown. The real reference electrode used was Ag/AgCl in saturated KCl and it was calibrated using hydrogen redox reaction on Pt (saturated hydrogen solution); the calibration gives the equation for the conversion between the real E_{Ag/AgCl} and E_{RHE} (E_{RHE} = E_{Ag/AgCl} + 0.919 V). From the curves in FIGURE 2 is possible to get the kinetic parameters for the catalysts prepared as in example 1 and 2 and Pt/C. TABLE 1 shows the experimental parameters and ORR kinetic activity of the catalysts in oxygen saturated 0.1 M KOH. The parameter jₖ at 900mV vs. Reversible Hydrogen Electrode is the current density corrected for mass transport, namely kinetic current density.

**TABLE 1 - RDE experimental and ORR activity in 0.1 M KOH at 900 mV vs RHE, 5 mV/s and 1600 rpm**

| **Catalyst** | **Catalyst loading mg/cm²** | **Metal loading µg_{M}/cm²** | **Carbon Loading mgc/cm²** | **Layer thickness µm** | **i_{s00mV} vs. RHE mA** | **j_{ks 500 mV} vs. RHE A/cm²** | **iₖ A/mg_{catalyst}** | **iₖ A/mg_{Pt}** | **iₖ A/cm³** |
|---|---|---|---|---|---|---|---|---|---|
| 10% Pt/C | 0.33 | 33 | 0.29 | 8.4 | 0.17 | 1.0 | 0.0031 | 0.030 | 1.2 |
| Fe-Co | 0.34 | 11 | 0.33 | 10 | 0.15 | 0.88 | 0.0026 | - | 0.91 |
| Fe-Cu | 0.34 | 11 | 0.33 | 10 | 0.37 | 2.8 | 0.0082 | - | 2.9 |

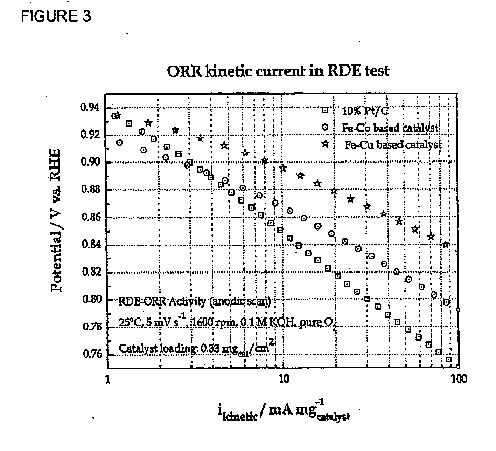

In FIGURE 3 the electrode potential as a function of RDE kinetic current are shown for the three catalysts. From this plot it is evident that the catalysts of the invention provide higher kinetic currents than Pt commercial catalysts at the same overpotential. From the curves graph in FIGURE 3 is possible to measure the overpotential decrease as a function of kinetic current in the case of the new Fe/Cu based catalyst with respect to Pt/C catalyst, obtaining an overvoltage decrease from 10 mV at 2 mA/mg_{catalyst} (0.66 mA/cm²) to 45 mV at 10 mA/mg_{catalyst} (3.3 mA/cm²) and 83 mV at 100 mA/mg_{catalyst} (33 mA/cm²). In the case of Fe/Co based catalyst the comparison with Pt/C catalyst, obtaining an overvoltage increase of 10 mV at 2 mA/mg_{catalyst} (0.66 mA/cm²) and an overvoltage decrease of 20 mV at 10 mA/mg_{catalyst} (3.3 mA/cm²) and 43 mV at 100 mA/mg_{catalyst} (33 mA/cm²).

### Electrochemical analysis in acidic medium:

The activity of the catalyst of the invention has been measured in acid medium in comparison with Pt 10 wt% on Vulcan. The electrochemical analyses were carried out in 0.1 M H₂SO₄ on Fe-Cu based, Fe-Co based as prepared in example 1 and 2 and a commercial 10 wt% Pt on Vulcan XC-72R. The inks are prepared using the Nafion ionomer (5 wt%) with the same recipe for all the catalysts. The ionomer to carbon weight ratio was 0.175.

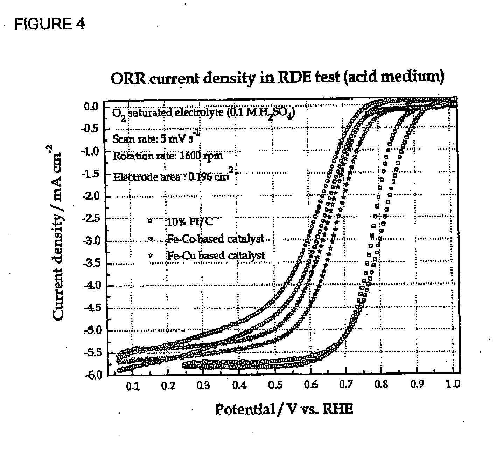

In FIGURE 4 are shown the Rotating Disk Electrode cyclic voltammograms of the three catalysts. The real reference electrode used was Ag/AgCl in saturated KCl and it was calibrated using hydrogen redox reaction on Pt (saturated hydrogen solution); the calibration gives the equation for the conversion between the real E_{Ag/AgCl} and E_{RHE} (E_{RHE} = E_{Ag/AgCl} + 0.243 V).

From the curves in FIGURE 4 is possible to measure the overpotential differences between the new Fe-Cu based catalyst, Fe-Co based catalyst and Pt/C, obtaining an overvoltage increase of 130 mV for Fe-Cu and 160 mV for Fe-Co. This is a result better in activity than the state of the art non-noble metal catalysts in acid medium (F. Jaouen *et al. J. Phys Chem*. *B* 2003, **107,** 1376).

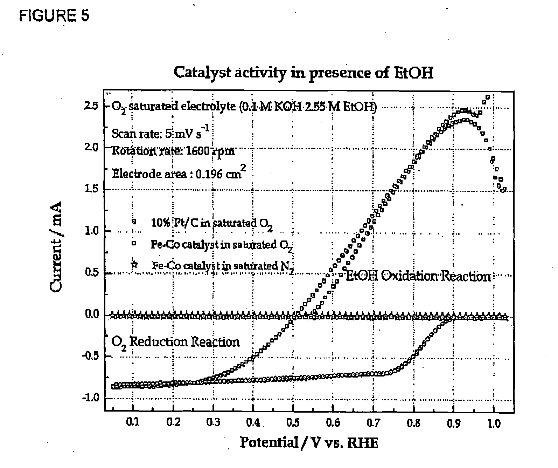

From the curves in FIGURE 5 is evident the difference in selectivity between the catalyst of the invention and 10 wt% Pt/C. In presence of 2.55 M EtOH the Pt catalyst is active for ethanol oxidation reaction in oxygen saturated solution while Fe-Co catalyst is completely inactive for ethanol oxidation reaction as shown in the solution saturated with N₂.

From the comparison between the diffusion limited currents of non-PGM catalysts of the invention and commercial 10 wt% Pt/C we have strong clues of the complete oxygen reduction to hydroxide ions pathway (the 4 electrons mechanism), with low hydrogen peroxide production; this is because the diffusion limited currents are always close to each other, both in alkaline and acid medium, and is well known that Pt provides 4 electrons.

## Claims

1. A catalyst material obtained by heat treating blends comprising:
a) a Fe phthalocyanine (PC) of formula (I) 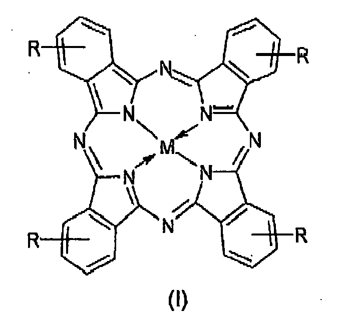 wherein
M is Fe²⁺, Fe³⁺
R is hydrogen or an electron-withdrawing substituent
wherein when M= Fe³⁺ a counterion X- is present
b) a transition metal phthalocyanine (Metal-PC) of formula (II) 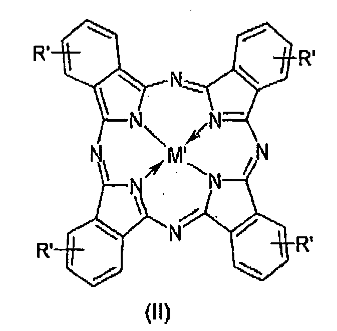 wherein
M' is Cu²⁺ or Co²⁺
R', independently from R, is hydrogen or an electron withdrawing substituent
c) an organic compound containing nitrogen and sulfur
d) an electronic conducting porous carbon materials

2. A catalyst according to claim 1 wherein:
said components a) and b) are those in which
- R and R' are independently hydrogen or an electron-withdrawing substituent chosen among halogen, -NO₂, -SO₃H, alkylsulphonyl, arylsulphonyl, -COOH, alkylcarboxyl, cyanide, alkylcarbonyl and arylcarbonyl;
- said counterion X⁻ (if present) is chloride or bromide;
said organic compound c) containing nitrogen and sulphur is chosen among thiourea, ammonium thiocyanate, thioacetamide, isothiocyanate and their salts or derivatives.

3. A catalyst according to claim 2 wherein the electronic conducting porous carbon materials d) is chosen among Ketjen Black, Vulcan XC-72R, acetylene black, carbon for ink treated with an oxidizing agent, pyrolytic carbon, natural graphite and artificial graphite.

4. A catalyst according to claim 3 wherein
- said organic compound c) is thiourea
- said electronic conducting porous carbon materials d) is Ketjen Black.

5. A catalyst according to claim 1-4 wherein the molar ratio between the chosen Metal-PC and the FePC is comprised between 1.1 to 1.4

6. A catalyst according to claims 5 wherein the molar ratio of the organic compound ranges from 0.4 to 0.6 in respect of the FePC + Metal-PC.

7. A process for the preparation of a catalysts material according to claim 1 comprising the following steps:
- components a, b, c and d are dispersed in an organic solvent and the resulting slurry is eventually sonicated
- the solvent is removed by evaporation
- the obtained blend is submitted to heat treatment
- thereafter the final product is collected

8. A process according to claim 9 wherein
- said heat treatment is a two step pyrolysis performed as following:
1. heating at 400-450°C for at least 0.5-1 hour
2. heating at 750-800°C for at least 1.5-2 hours

9. A process according to claim 9 wherein
- said slurry is left under stirring for 12-36 hours at 20-25 °C and then is sonicated for at least 30 minutes
- the organic solvent is chosen among methanol, ethanol, propanol, isopropanol, THF, DMF, DMA

10. A catalyst material according to claims 1-6 composed of a mixture of Ketjen Black and thiourealMetal-PC/FePC in molar ratio 1.1/1.2/1.0 and prepared by a two steps pyrolysis according to claims 7-9.

11. Use of a catalyst according to claims 1-6 or 10 as catalyst for ORR occurring at cathode of an electrochemical device.

12. Use of a catalyst according to claim 11 wherein the ORR occurs in alkaline medium.

13. Use of a catalyst according to claims 12 wherein the electrochemical device is an anion-exchange membrane fuel cell or an alkaline metal-air battery.

14. Use of a catalyst according to claim 11 wherein the ORR occurs in acidic medium.

15. Use of a catalyst according to claims 12 wherein the electrochemical device is a proton-exchange membrane fuel cell.
